# EUROPÄISCHE PATENTANMELDUNG

(11) **EP 2 468 493 A1**
(43) Veröffentlichungstag der Anmeldung: **27.06.2012**
(21) Anmeldenummer: 10196854.3
(22) Anmeldetag: 23.12.2010
(51) Int. Cl.: B31B 11/00

(54) **Vorrichtung zum Prägen von Folien**

(71) Anmelder: Boegli-Gravures S.A., 2074 Marin-Epagnier (CH)
(72) Erfinder: Boegli, Charles, CH-2074, Marin-Epagnier (CH)
(74) Vertreter: AMMANN PATENTANWÄLTE AG BERN

(57) **Zusammenfassung**

Die Vorrichtung zum Prägen von Folien weist eine Prägeeinheit (34) auf, die mindestens zwei Walzen (40, 41) enthält, wovon mindestens eine (40) eine Prägewalze ist und über einen Antrieb (5) angetrieben ist, wobei mindestens die Prägewalze vom Grundzylinder wegragende Zähne (B) zur Bildung von Logos auf der Folie einen Logobereich (27) mit Zähnen (39) aufweist, die von den regelmässig angeordneten Zähnen (A) verschieden sind, um auf der Folie einen veränderlichen spezifischen Prägedruck erzeugen, wobei die Walzen Zentrierelemente (4, 8) zum Zentrieren der Prägewalze (40) bezüglich der anderen Walze (41) aufweist, die sowohl axial als auch radial wirksam sind. Dadurch ist es möglich, Logos mit wesentlich höherer Gestaltungsvielfalt und Genauigkeit zu prägen als vorbekannt, um einen ästhetisch anspruchsvollen Eindruck zu erzielen.

## Beschreibung

Die vorliegende Patentanmeldung bezieht sich auf eine Vorrichtung zum Prägen von Folien gemäss Oberbegriff von Patentanspruch 1 und auf mit dieser Vorrichtung hergestellte Folien.

Die zu verwendenden Folien können aus Papier oder Kunststoff hergestellt oder Hybridfolien sein, bei denen sich eine z.B. aufgesputterte Metallschicht zwischen Kunststoff- und/oder Papierschichten befindet, oder aus Metall bestehen oder mit einer Metallschicht versehen sein. Sie können für sog. Innerliner, für Zigarettenmundstücke oder für die Verpackung von Schachteln oder dergleichen verwendet werden. Im folgenden wird vereinfachend für alle diese verschiedenen Folienarten die Bezeichnung "Folie" verwendet.

Beim Prägen von Logos jeglicher Art auf Folien im Pin-up - Pin-up Verfahren, d.h. mittels aus dem Zylinderumfang herausragenden Zähnen an der Prägewalze und ebenfalls herausragende Zähnen auf der Gegenwalze, gibt es grundsätzlich zwei Verfahren. Beim üblichen Verfahren werden die Logos durch Entfernen oder Ändern der beteiligten Zähne an der Prägewalze hergestellt und die übrigen Zähne dienen dem Satinieren. Bei einer zweiten Herstellungsart werden nur dort Zähne auf der Prägewalze hergestellt, wo die Logos vorgesehen sind. An den übrigen Stellen können Zähne vorhanden sein, die dem Antrieb und der Stabilität der Walzen dienen.

Beiden Verfahren ist gemeinsam, dass insbesondere bei grösseren Stellen ohne Zähne die Folie nicht über die gesamte Breite gleichmässig geprägt wird, da der Druck auf die Folie nicht derselbe ist, ob Zähne ineinander greifen oder Zähne einer Walze Leerstellen an der anderen Walze gegenüberliegen.

Ausserdem geht der Trend beim Prägen in Richtung immer feinerer Zähne und Strukturen. Während in der Regel ein Zahnabstand = Pitch von 0,3 mm Standard war, sind aktuell Abstände bis 0,10 mm üblich geworden. Neuere Prägetechniken ermöglichen es auch, nur an wenigen Stellen zu prägen, während die übrigen Stellen der Walze derart beschaffen sind, dass die Folie dort ungeprägt bleibt.

Neben dem Herstellen von Logos durch Weglassen von Zähnen oder indem nur dort Zähne vorgesehen werden oder durch das sogenannte Schattenprägen, bei welchem Logos dadurch hergestellt werden, dass Zähne verändert werden, besteht stets der Wunsch der Abnehmer, Logos mit noch anderen Strukturen und/oder mit erhöhter Brillanz vorzusehen.

Daraus folgend ist es Aufgabe der vorliegenden Erfindung eine Vorrichtung zum Prägen vorzusehen, mit welcher Logos oder ganze Folien mit grösseren Gestaltungsmöglichkeiten und wesentlich genauer geprägt werden können. Eine solche Vorrichtung ist im unabhängigen Anspruch 1 definiert.

Die Erfindung wird im Folgenden anhand von Zeichnungen von Ausführungsbeispielen näher erläutert, wobei sämtliche Figuren schematisch und einige in perspektivischer Sicht gezeichnet sind.
- Fig. 0: zeigt die wesentlichen Teile einer Vorrichtung gemäss Stand der Technik mit zwei Walzen mit Zähnen in einer Pin up - Pin up Konfiguration,
- Fig. 1: zeigt ein erstes Ausführungsbeispiel einer erfindungsgemässen Vorrichtung mit zwei Walzen mit Zähnen in der Pin up - Pin up Konfiguration,
- Fig. 2: zeigt eine Ausführungsvariante der Vorrichtung von Fig. 1 mit anderen Zähnen,
- Fig. 3: zeigt eine weitere Ausführungsform der Erfindung mit drei Walzen,
- Fig. 4: zeigt eine Ausführungsvariante der Vorrichtung von Fig. 3 mit anderen Zähnen,
- Fig. 5: zeigt eine weitere Ausführungsvariante der Vorrichtung von Fig. 3 mit inneren Zentrierringen,
- Fig. 6: zeigt ein weiteres Ausführungsbeispiel der erfindungsgemässen Vorrichtung von Fig. 1 mit anderen Zähnen,
- Fig. 7: zeigt eine Variante zum Beispiel von Figur 6 mit anderen Zähnen,
- Fig. 8: zeigt eine Variante zum Beispiel von Fig. 6 mit anderen Zähnen,
- Fig. 9: zeigt eine Variante zum Beispiel von Figur 6 mit anderen Zentrierelementen,
- Fig. 10: zeigt eine weitere Variante der Vorrichtung von Fig. 1,
- Fig. 11: zeigt eine weitere Variante zu Figur 1 mit anders angeordneten Zähnen,
- Fig. 12: zeigt eine Ausführungsvariante zu Fig. 11,
- Fig. 13: zeigt ein weiteres Ausführungsbeispiel mit Zähnen in Pin up - Pin down Konfiguration,
- Fig. 14: zeigt eine Ausführungsvariante zur Vorrichtung von Fig. 13,
- Fig. 15: zeigt eine Ausführungsvariante zur Vorrichtung von Fig. 7,
- Fig. 16: zeigt eine Ausführungsvariante zur Vorrichtung von Fig. 4,
- Fig. 17: zeigt eine Ausführungsvariante zur Vorrichtung von Fig. 9,
- die Figuren 18, 19: zeigen als weiteres Ausführungsbeispiel der Erfindung zwei Vorrichtungen für das positive Prägen,
- Fig. 20: zeigt als weiteres Ausführungsbeispiel eine Vorrichtung mit zwei Walzen mit Zähnen zur Erzeugung eines höheren spezifischen Prägedrucks,
- Fig. 21: zeigt eine Ausführungsvariante zur Vorrichtung von Fig. 20 mit anderen Zähnen,
- Fig. 22: zeigt eine Ausführungsvariante zur Vorrichtung von Fig. 17 mit weiteren Zähnen,
- die Figuren 23 - 25: zeigen je eine Ausführungsvariante zu den Figuren 20 - 22, und
- die Figuren 26 - 29: zeigen Ausführungsvarianten zu den Figuren 6 und 9 bezüglich der Zentrierelemente.

Die neuen Strukturen, entweder in einem Logobereich oder über die ganze Folie verteilt, werden durch Änderung des spezifischen Prägedruckes, d.h. durch Änderung der am Prägevorgang beteiligten Spitzen der Zähne erzeugt, wobei die Gesamtzahl der Zähne dieselbe bleibt. Vorwiegend, jedoch nicht ausschliesslich, wird die Erhöhung des spezifischen Druckes durch Verkleinerung der am Prägen beteiligten Oberflächen der Zahnspitzen erzeugt. Demgemäss bewirkt eine Vergrösserung der Oberflächen der Zahnspitzen eine Verminderung des spezifischen Prägedruckes.

Die Veränderung des spezifischen Prägedrucks lässt sich durch Veränderung der am Prägen beteiligten Zahnspitzen-Oberflächen erzielen, falls die Anzahl Zähne dieselbe bleibt. Das bedeutet, dass der Pitch, d.h. die Periodizität der Zahnung axial, bzw. umfänglich je derselbe für alle Zähne ist. Möglich wäre auch eine lokale Erhöhung der Zähne, um eine Erhöhung des spezifischen Prägedrucks zu erzielen.

Solche feineren und vereinzelten Zahnstrukturen sind mit den Techniken des Standes der Technik, z.B. gemäss US-6 176 819 des gleichen Anmelders, bei welchen die Gegenwalze(n) in den drei Koordinatenachsen in einem gewissen Umfang frei beweglich ist (sind) nicht mehr in der gewünschten Präzision herstellbar und im Folgenden werden dafür geeignete Vorrichtungen, bzw. Prägeeinheiten beschrieben.

Das Prägen von sog. Innerlinern zum Verpacken einer Anzahl Zigaretten, beispielsweise 20 Stück, mittels einer Pin up - Pin up Konfiguration genannten Prägewalzenanordnung ist aus einer grossen Anzahl von Patenten und Patentanmeldungen des gleichen Anmelder bekannt, so z.B. aus den US-5 007 271, US-6 176 819 oder US-7 036 347. Dabei ragen definitionsgemäss die Zähne aus dem Grundzylinder hinaus, der durch die Ebene, die durch die Täler zwischen den Zähnen gebildet wird, definiert ist.

Den bekannten Prägeeinheiten ist gemeinsam, dass sie mindestens ein Walzenpaar aufweisen, wovon die erste Walze von einem Antrieb 5, z.B. über einen Riemen von der Anlage oder durch einen separaten Motor, angetrieben ist und diese angetriebene Walze über die Zähne via der dazwischen durchlaufenden Folie die Gegenwalze(n) antreibt.

Bei diesen Vorrichtungen wird die metallisierte Oberfläche der Folie satiniert, d.h. mit einer sehr grossen Anzahl von kleinen Einbuchtungen versehen, die eine diffuse Reflexion des auftreffenden Lichts bewirken. Durch Weglassen oder Verändern von Zähnen entsteht ein Logos, entweder als Teil der nicht geprägten, glänzenden Folienoberfläche oder als geprägte Folienoberflächenteile, die je nach Lichteinfall verschiedene optische Effekte zeigen.

Ausserdem ist aus der US-7 147 453 oder EP-2 027 994 A2 des gleichen Anmelders eine Prägeeinheit bekannt, die aus drei Walzen besteht, wobei im Falle, dass alle drei Walzen Zähne aufweisen, die angetriebene Walze die beiden Gegenwalzen antreibt oder die Walzen über Synchronisationsmittel miteinander verbunden sind.

Im Prinzip sind im wesentlichen zwei Verfahren zum Prägen von Logos bekannt, wobei unter Logos sämtliche Zeichen, Wörter, Dekorations- oder Verstärkungselemente gemeint sind: Zum Einen das Prägen von Logos in einem Umfeld, das als satiniert definiert wird und das aus regelmässig angeordneten sehr kleinen Einbuchtungen besteht, wobei durch Entfernen oder Verändern von Zähnen entweder die ungeprägte Folienoberfläche erscheint oder eine derartig modifizierte Oberfläche dort entsteht, deren Aspekt sich je nach Beleuchtungsbedingungen ändert. Hier kann man von einer negativen Logoprägung reden.

Andererseits kann das Logo durch Zähne geprägt werden, die in einem zahnlosen, ebenen Umfeld angeordnet sind, so dass von einer positiven Logoprägung gesprochen werden kann.

Nachfolgend werden verschiedene Zahntypen A - D dargestellt, die jedoch nicht limitatif gedacht sind und stellvertretend für eine grosse Anzahl von Zahntypen sind. Dabei sind die Seiten der Zähne des Typs A, B, C orthogonal zur Walzenachse ausgerichtet, während die Seiten der Zähne des Typs D einen Winkel mit der Längsachse einschliessen, der in den gezeigten Beispielen 45° beträgt.

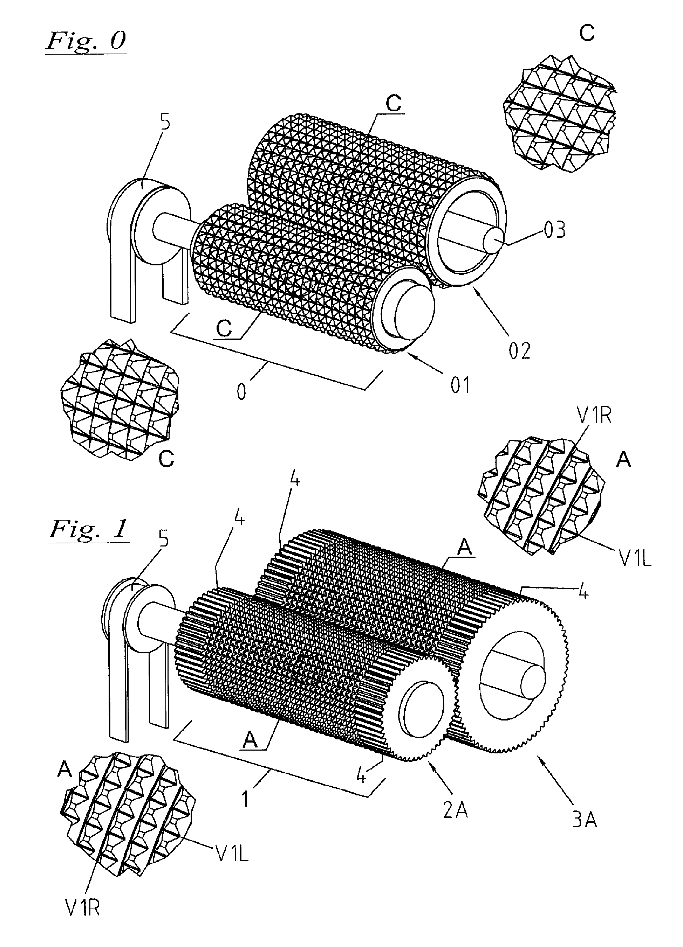

Fig. 0 zeigt eine für das Prägen von Innerlinern bewährte Prägeeinheit 0 gemäss Stand der Technik mit Zähnen des Typs C in der sogenannten Pin up - Pin up Konfiguration, wie sie beispielsweise in der US-6 176 819 beschrieben ist und in welcher die beiden Walzen 01 und 02 dieselben aus der Oberfläche herausragenden Zähne C aufweisen, wobei hier ein Zahn einer Walze zwischen vier Zähnen der anderen Walzen greift, womit eine Selbstsynchronisation erzielt wird. Die erste Walze 01 ist durch einen symbolisch dargestellten Antrieb 5 angetrieben, wobei der Antrieb auch ein Motor sein kann. Die Zähne C sind pyramidenförmig mit quadratischem Querschnitt, regelmässig angeordnet und besitzen hier einen Pitch von 0,3 mm. Die Selbstsynchronisation bedingt, dass die Gegenwalze 02 eine Achse 03 aufweist, die in den drei Koordinatenrichtungen beweglich ist.

Wie vorhergehend erläutert, stösst eine solche Vorrichtung mit einer sich selbstsynchronisierenden Zahnanordnung an ihre Grenzen, falls der spezifische Prägedruck lokal verändert werden soll, indem einzelne Zähne oder Zahngruppen von den regelmässig angeordnete Zähnen verschiedene Zahnformen mit kleineren oder grösseren wirksamen Oberflächen aufweisen, wodurch lokal der spezifische Druck auf die Folie geändert wird, um dort verschiedene Muster zu erzeugen. Dabei bleibt die Gesamtanzahl der Zähne dieselbe. Es ist auch vorgesehen, auf der gesamte Folie oder über grosse Bereiche Logos mit unterschiedlichen spezifischen Prägedrücken zu prägen.

Dieses Problem mit den in den drei Koordinatenrichtungen beweglichen Gegenwalzen entsteht auch, falls der Pitch auf z.B. 0,10 mm verkleinert wird oder fein strukturierte Logos erzeugt werden sollen, die zudem in einem Umfeld ohne Zähne angeordnet sind. Es werden jedoch nicht nur die Strukturen verfeinert, es wird auch die Rotationsgeschwindigkeit der Walzen stark erhöht. Wenn z.B. eine Walze mit einem Umfang von 250 mm und Zähnen von 0,4 mm Abstand bei einer Rotationsgeschwindigkeit von 200m/min betrieben wird, ergibt sich eine Interaktionszeit der Zähne von 30 ms. Falls die Geschwindigkeit auf 1000 U/min erhöht und der Pitch auf 0,2 mm verkleinert wird, ergibt sich eine Interaktionszeit der Zähne von 3 ms, die kritisch werden kann. Alle diese Probleme können gelöst werden, falls die Walzen gegenseitig sowohl axial als auch radial zentriert werden.

Die axialen Zentrierelemente enthalten Zentrierringe, die entweder in die Täler zwischen entsprechenden Ringen auf der anderen Walze oder in die Täler zwischen den Zähnen auf der anderen Walze greifen. Für die umfängliche Zentrierung sind ineinandergreifende Zahnkränze vorgesehen, die ausserdem die Kraftübertragung erhöhen. Diese Zentrierelemente sind sehr genau bearbeitet, wobei die Genauigkeit der Zentrierung in axialer Richtung - Zentrierringe - über die ganze Länge der Walze von z.B. 250 mm unter 20 µm und in umfänglicher Richtung - Zahnkränze - über den Umfang von 70 mm gesehen in der Regel unter 5 µm, bevorzugt unter 2 µm liegt. Bei Walzen mit anderen Abmessungen ändern sich diese Anforderungen an die Genauigkeit entsprechend.

Die nachfolgenden Figuren zeigen beispielhaft verschiedene Ausführungsformen der Erfindung.

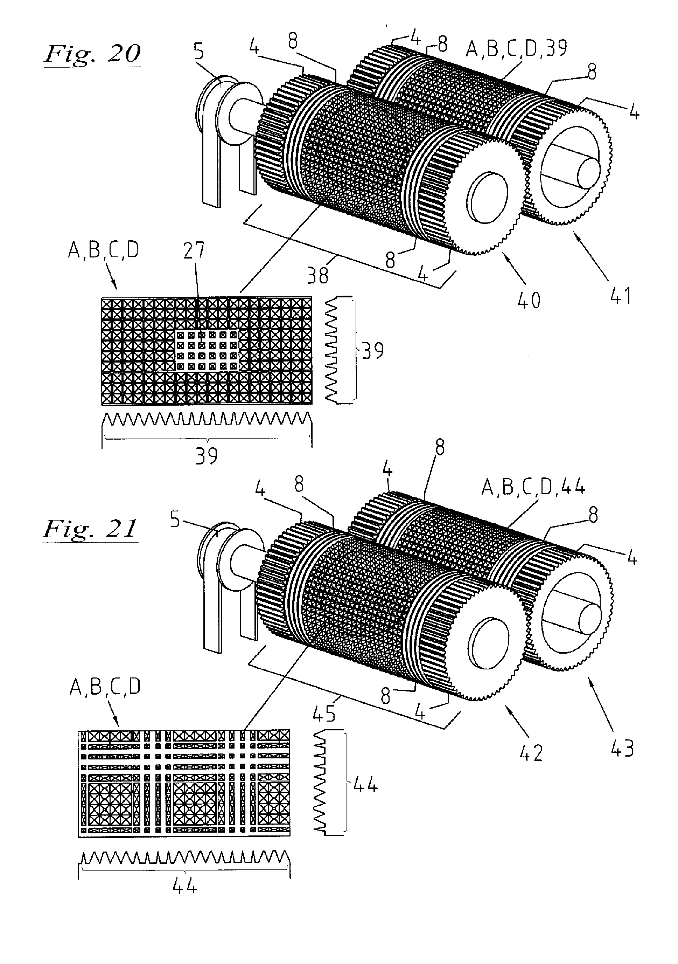

Gemäss Fig. 1 werden in der Prägeeinheit 1 zwei Walzen für das Prägen eines Folienbandes 6 verwendet. Die über Antrieb 5 angetriebene Walze 2A und die Gegenwalze 3A enthalten in Figur 1 nur Zähne des Typs A. Eine der Walzen oder beide Walzen enthalten einen Logobereich 27 oder eine Zahnung 44, 49 zur Erhöhung des spezifischen Prägedruckes wie gemäss den Figuren 20 bis 25 dargestellt und beschrieben.

Die Zähne des Typs A sind pyramidenförmig mit rechteckigem Grundriss und orthogonal zur Walzenachse ausgerichtet, wobei deren Längserstreckung in axialer Richtung kleiner ist als in umfänglicher Richtung und die Täler V1R in umfänglicher Ausrichtung von den Zahnspitzen aus gemessen tiefer sind als diejenigen V1L in axialer Ausrichtung. Dadurch wird eine axiale Zentrierung beider Walzen bewirkt.

Zwecks umfänglicher Zentrierung und zur Erzielung der notwendigen Übertragungskraft von der angetriebenen Walze auf die Gegenwalze weisen beide Walzen 2A und 3A beidseits ausserhalb der Folienbreite angeordnete ineinandergreifende Zahnkränze 4 auf, die daher nicht dem Prägen dienen.

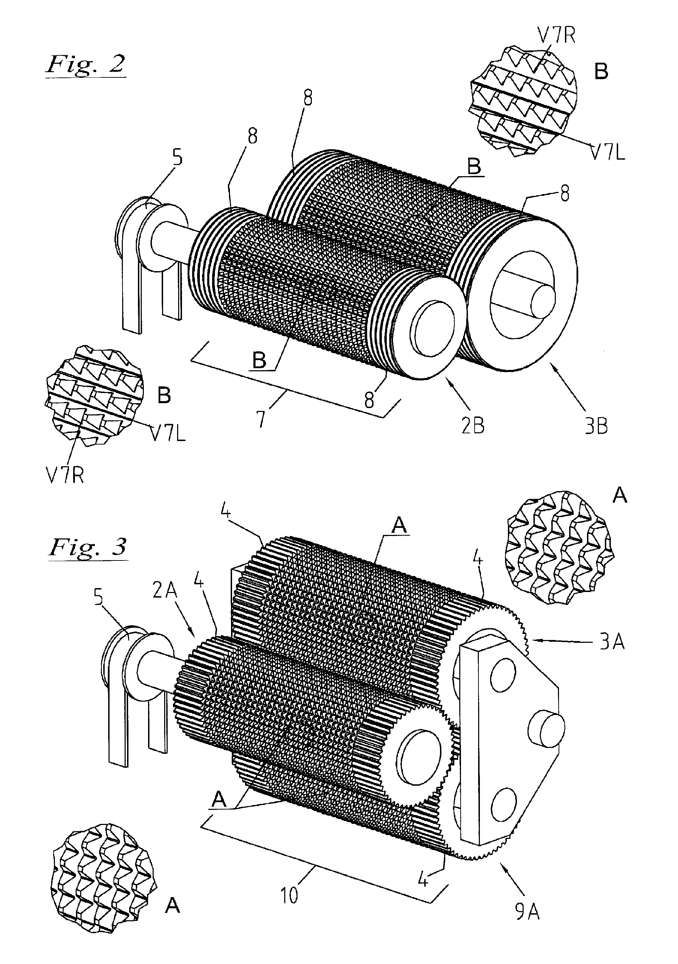

Die Prägeeinheit 7 von Fig. 2 weist zwei Walzen 2B und 3B auf, die pyramidenförmige Zähne des Typs B aufweisen, die einen rechteckigen Grundriss haben, wobei deren Längserstreckung in axialer Richtung grösser ist als in umfänglicher Richtung und die Täler V7L in axialer Ausrichtung tiefer sind als die Täler V7R in umfänglicher Ausrichtung. Dadurch kann sowohl die umfängliche Zentrierung als auch die notwendige Kraftübertragung ausreichend sein. Eine der Walzen oder beide Walzen enthalten einen Logobereich 27 oder eine Zahnung 44, 49 zur Erhöhung des spezifischen Prägedruckes, wie in den Figuren 20 bis 25 dargestellt und beschrieben.

Zwecks axialer Zentrierung sind beidseits beider Walzen und ausserhalb der Folie Zentrierringe 8 angeordnet, wobei die Walzen derart angeordnet sind, dass jeweils die Zentrierringe der einen Walze zwischen jeweils zwei Zentrierringen der anderen Walze greifen.

Die Prägeeinheit 10 gemäss Fig. 3 weist drei Walzen 2A, 3A, 9A auf, mit den Zähnen des Typs A und wie Prägeeinheit 1 mit den Zahnkränzen 4, wobei die angetriebene Walze 2A die anderen zwei Walzen antreibt. Eine, zwei oder alle drei Walzen können einen Logobereich 27 oder eine Zahnung 44, 49 zur Erhöhung des spezifischen Prägedruckes, wie in den Figuren 20 bis 25 dargestellt und beschrieben aufweisen.

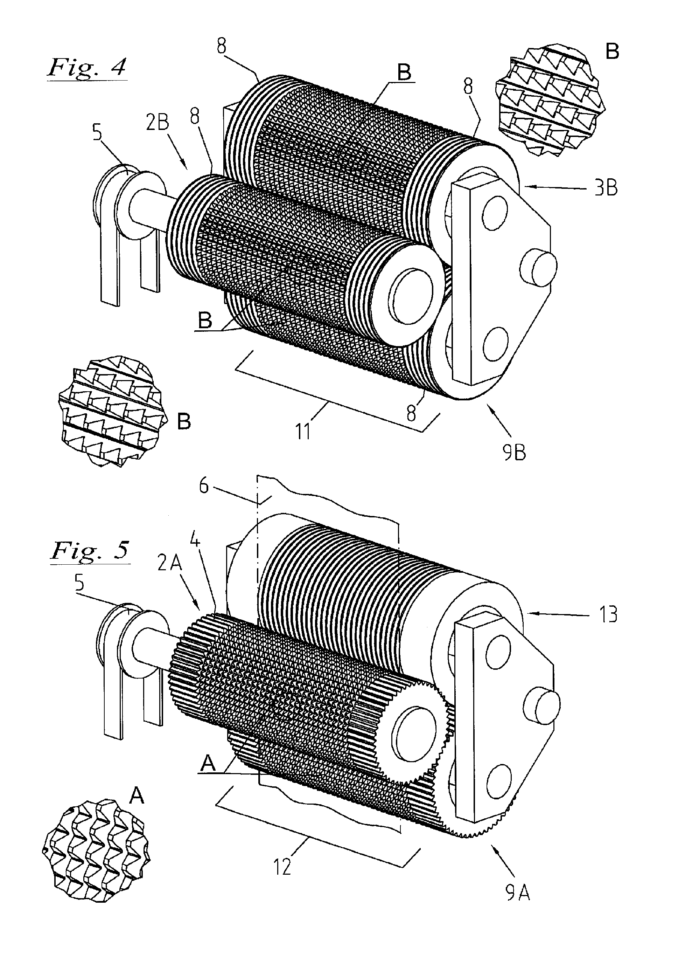

Die Prägeeinheit 11 von Fig. 4 weist ebenfalls drei Walzen 2B, 3B, 9B mit Zähnen des Typs B auf, sowie analog zur Prägeeinheit 7 von Fig. 2 Zentrierringe 8, wobei eine, zwei oder alle drei Walze(n) einen Logobereich 27 oder eine Zahnung 44, 49 zur Erhöhung des spezifischen Prägedruckes, wie in den Figuren 20 bis 25 dargestellt und beschrieben aufweisen.

Die Prägeeinheit 12 gemäss Fig. 5 weist zwei Walzen 2A und 9A wie in Fig. 3 und eine Zentrierwalze 13 auf, die nur mit Zentrierringen 8 versehen ist, wobei die Walzen 2A und/oder 9A einen Logobereich 27 oder eine Zahnung 44, 49 zur Erhöhung des spezifischen Prägedruckes, wie in den Figuren 20 bis 25 dargestellt und beschrieben aufweisen.

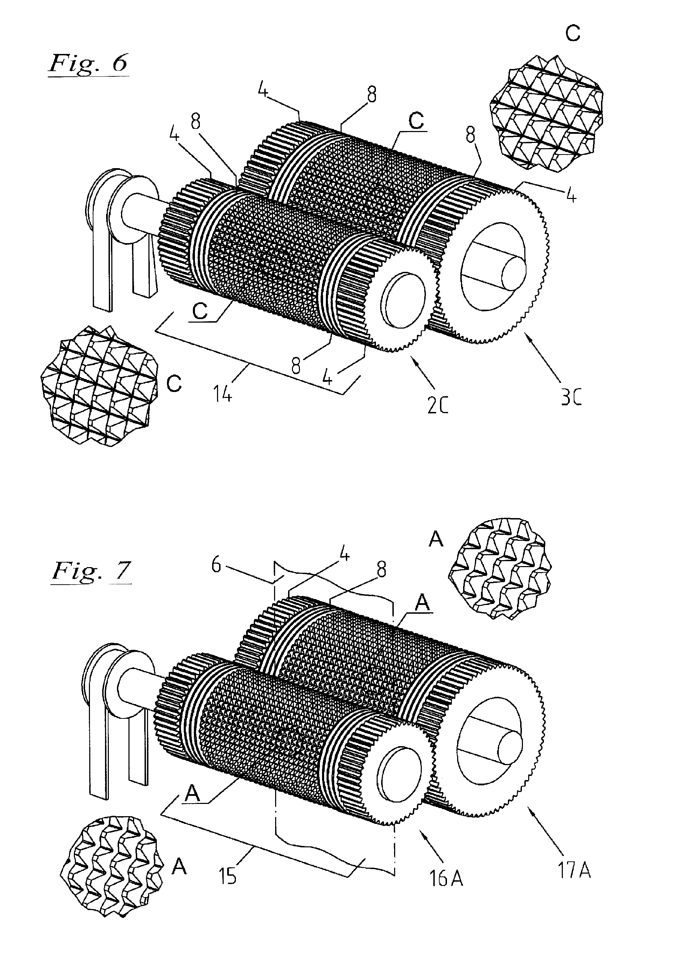

Die Prägeeinheit 14 gemäss Fig. 6 weist zwei Walzen 2C und 3C analog zu Fig. 2 auf, jedoch mit den Zähnen des Typs C und somit mit den Zahnkränzen 4 und mit den Zentrierringen 8. Dabei weisen die Walzen 2C und/oder 3C einen Logobereich 27 oder eine Zahnung 44, 49 zur Erhöhung des spezifischen Prägedruckes, wie in den Figuren 20 bis 25 dargestellt und beschrieben auf.

Gemäss Fig. 7 weist die Prägeeinheit 15 zwei Walzen 16A und 17A mit Zähnen des Typs A auf, die mit Zahnkränzen 4 und Zentrierringen 8 versehen sind. Dabei weisen die Walzen 16A und/oder 17A einen Logobereich 27 oder eine Zahnung 44, 49 zur Erhöhung des spezifischen Prägedruckes, wie in den Figuren 20 bis 25 dargestellt und beschrieben auf. In Fig. 7 ist die Folienbahn 6 eingezeichnet.

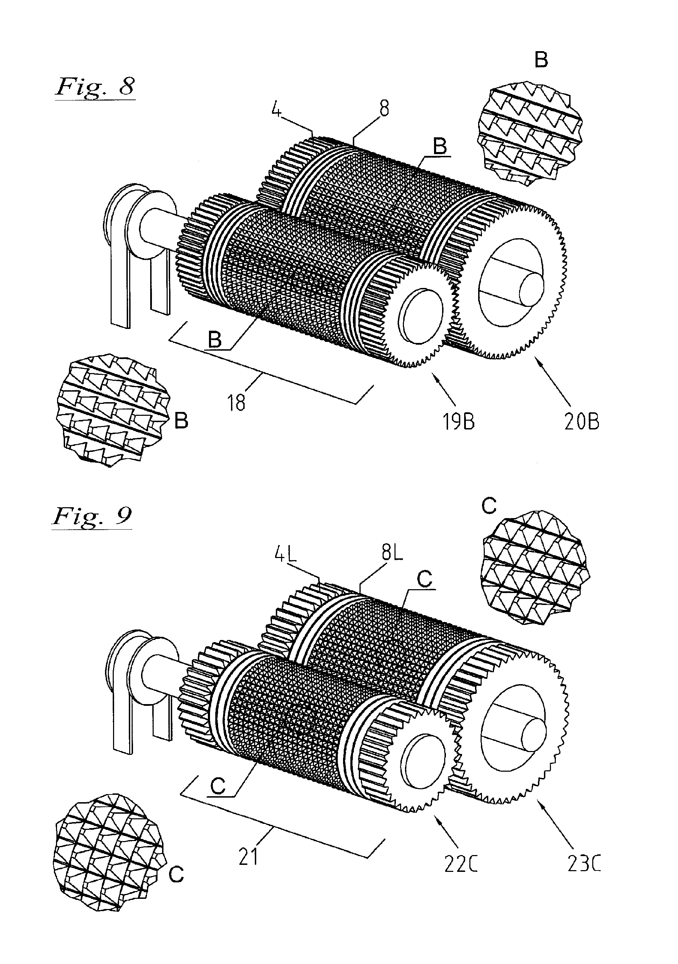

Gemäss Fig. 8 weist die Prägeeinheit 18 zwei Walzen 19B und 20B mit Zähnen des Typs B auf, die mit Zahnkränzen 4 und Zentrierringen 8 versehen sind. Dabei weisen die Walzen 19B und/oder 20B einen Logobereich 27 oder eine Zahnung 44, 49 zur Erhöhung des spezifischen Prägedruckes, wie in den Figuren 20 bis 25 dargestellt und beschrieben auf.

Gemäss Fig. 9 weist die Prägeeinheit 21 zwei Walzen 22C und 23C mit Zähnen des Typs C auf, die mit Zahnkränzen und Zentrierringen versehen sind. In diesem Beispiel sind sowohl die Zahnkränze 8L mit gröberen Zähnen als auch die Zentrierringe mit grösseren Abständen als die Zahnkränze 4 und Zentrierringe 8 ausgeführt. Dabei weisen die Walzen 22C und/oder 23C einen Logobereich 27 oder eine Zahnung 44, 49 zur Erhöhung des spezifischen Prägedruckes, wie in den Figuren 20 bis 25 dargestellt und beschrieben auf.

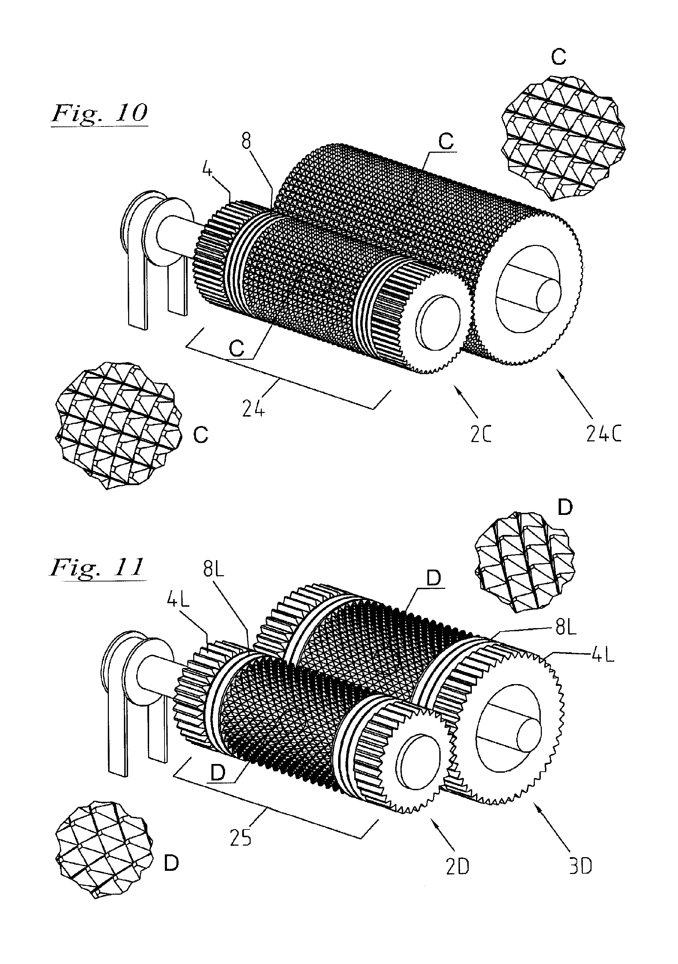

Die Prägeeinheit 24 von Fig. 10 weist eine Walze 2C und eine Walze 24C auf, die nur Zähne des Typs C jedoch weder Zahnkränze noch Zentrierringe aufweist. Dabei weisen die Walzen 2C und/oder 24C einen Logobereich 27 oder eine Zahnung 44, 49 zur Erhöhung des spezifischen Prägedruckes, wie in den Figuren 20 bis 25 dargestellt und beschrieben, auf.

Die Prägeeinheit 25 gemäss Fig. 11 weist eine angetriebene Walze 2D und eine Gegenwalze 3D auf, mit Zähnen des Typs D. Wie aus der Vergrösserung hervorgeht, sind die Seiten der pyramidenförmigen Zähne um einen Winkel gegenüber der Walzenachse verdreht, der hier 45° beträgt. Die Zähne D und deren Anordnung sowie die Zentrierelemente 4L, 8L sind auf beiden Walzen dieselben. Dabei können die Walzen 2C und/oder 24C einen Logobereich 27 oder eine Zahnung 44, 49 zur Erhöhung des spezifischen Prägedruckes, wie in den Figuren 20 bis 25 dargestellt und beschrieben aufweisen.

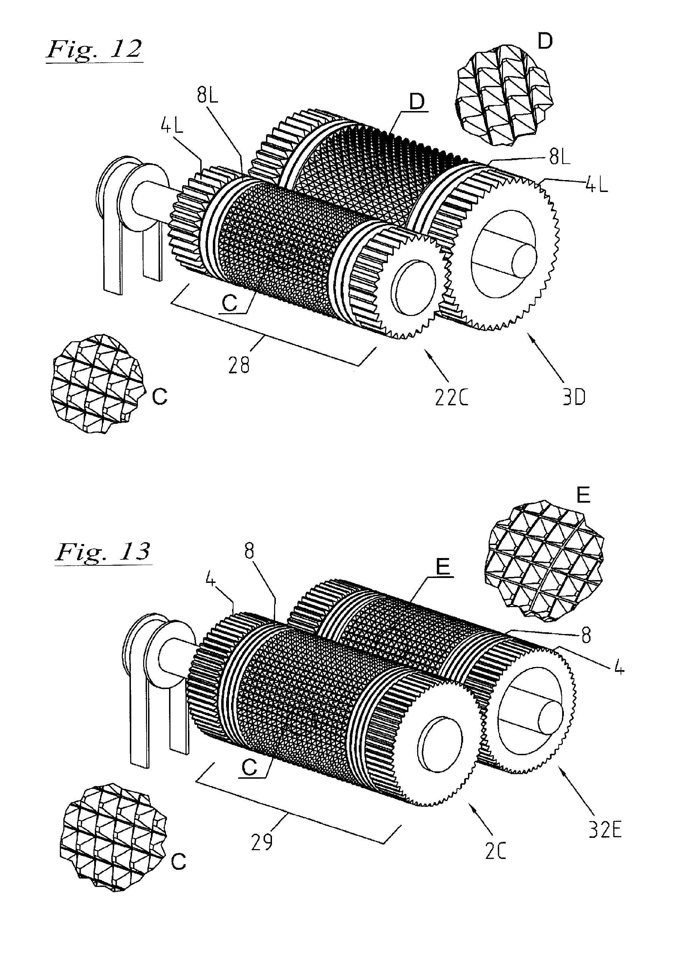

In Fig. 12 ist eine Prägeeinheit 28 mit einer Kombination einer Walze 22C von Fig. 9 und einer Walze 3D von Fig. 11 dargestellt, d.h. mit pyramidenförmigen Zähnen, die auf der Walze 22C orthogonal zur Walzenachse stehen und auf der anderen Walze 3D in einem Winkel dazu angeordnet sind. Beide Walzen weisen die gröberen Zentrierelemente 4L und 8L auf und eine oder beide Walzen weisen einen Logobereich 27 oder eine Zahnung 44, 49 zur Erhöhung des spezifischen Prägedruckes auf, wie in den Figuren 20 bis 25 dargestellt und beschrieben.

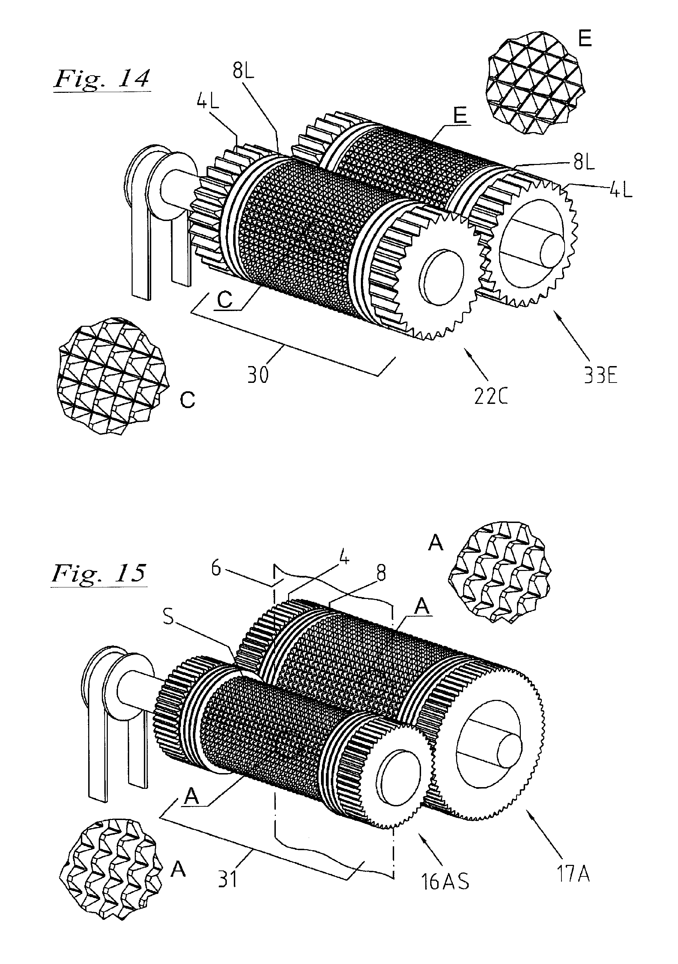

Die Prägeeinheiten 29 und 30 gemäss den Figuren 13 und 14 weisen eine sog. Pin up - Pin down Konfiguration auf. Die Prägeeinheit 29 weist eine angetriebene Walze 2C mit herausragenden Zähnen des Typs C und eine Walze 32E auf, die den Zähnen C entsprechende Vertiefungen E aufweist, siehe Vergrösserungen. Eine solche Pin up - Pin down Einheit erfordert eine gute Synchronisation der Walzen, die durch die Zahnkränze 4 und Zentrierringe 8 gewährleistet ist. Die Prägewalze 2C weist einen Logobereich 27 oder eine Zahnung 44, 49 auf, wie anhand der Figuren 20 - 25 beschrieben.

Die Prägeeinheit 30 von Fig. 14 ist eine Variante zu der Prägeeinheit 29, mit der Walze 22C und Gegenwalze 33E, beide mit den gröberen Zahnkränzen 4L und Zentrierringen 8L.

In den Prägevorrichtungen gemäss den Figuren 1 bis 14 dienen die Zentrierelemente in erster Linie als Vorzentrierelemente bis zu dem Moment, in dem die zu prägende Folie eingezogen wird. Dabei können zwei Schritte unterschieden werden:
a) Die Walzen werden so eingestellt, dass ein Abstand zwischen 0,5 mm und einigen mm zwischen den Walzen bleibt, um die Folie bequem einzufädeln, und
b) der gegenseitige Abstand der Walzen wird reduziert, in der Regel pneumatisch, bis der richtige Prägedruck eingestellt ist, der von vielen Faktoren abhängt.

Die ineinandergreifenden Zentrierelemente können dabei verhindern, dass sich die Pyramidenspitzen berühren, falls die Folie reisst. Dieser Effekt kann verstärkt werden, falls die Zahnoberflächen um einen Betrag S abgesenkt werden, der in der Grössenordnung der Foliendicke liegt. Die Absenkung erstreckt sich über eine etwas grössere Länge als die Breite der Folie. Dadurch erhalten die Walzen dort insgesamt einen um S = 0,02 bis 0,2 mm geringeren Durchmesser. Diese Absenkung S gewährleistet ausserdem eine regelmässigere Prägung über die gesamte Breite der Folie. Dabei kann die Absenkung S auf einer Walze, in der Regel Prägewalze, angeordnet sein oder auf zwei oder drei Walzen verteilt sein.

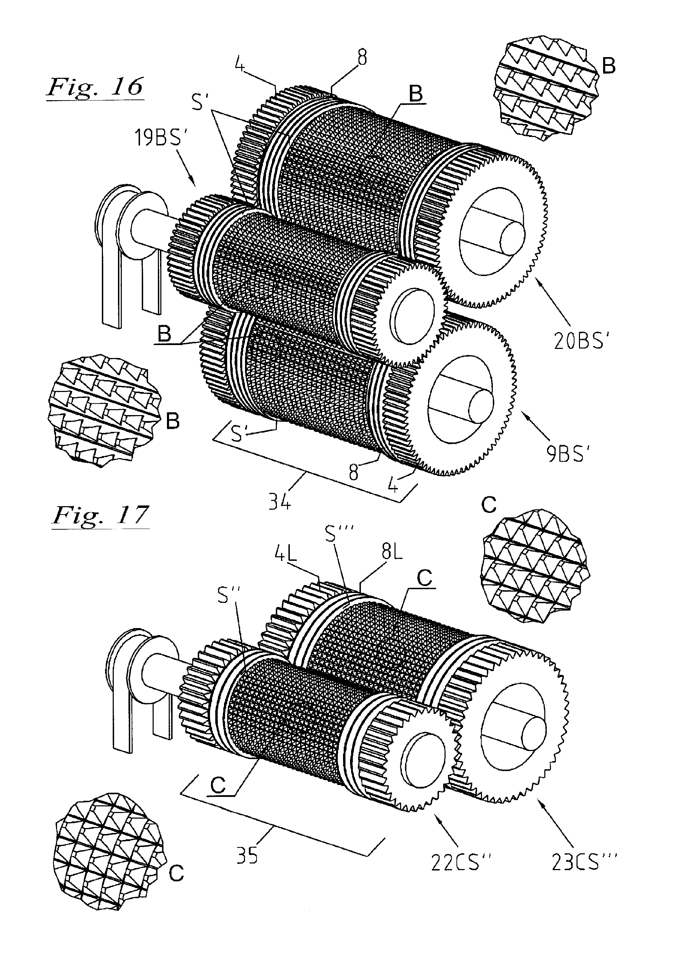

Die Figuren 15 bis 17 zeigen verschiedene Ausführungsformen der Gesamt-Absenkung S. Gemäss Fig. 15 ist eine Absenkung S an der angetriebenen Walze 16AS der Prägeeinheit 31 angebracht. Fig. 16 zeigt die Prägeeinheit 34 mit dem Dreiwalzensystem analog dem System von Fig. 4, wobei daraus hervorgeht, dass sich die Absenkung S aus zwei Absenkungen S' zusammensetzt, die zusammen je die Absenkung S für das Paar 19BS', 20BS' oder 19BS', 9BS'ergeben.

Fig. 17 zeigt die Prägeeinheit 35 mit den Walzen 22CS " und 23CS"', analog der Prägeeinheit gemäss Fig. 9, die je eine Absenkung S ", S"' aufweisen, die zusammen die Absenkung S ergeben. Die Teilabsenkungen können gleich sein oder verschiedene Werte annehmen. Auch die Walzen gemäss den Figuren 15 - 17 weisen Logobereiche 27 oder die Zahnung 44, 49 auf, entweder auf einer oder zwei oder drei Walzen. Die Walzen weisen die Zentrierelemente 4, 4L; 8, 8L auf.

Beim Satinieren und gleichzeitigen negativen Prägen von Logos auf Innerlinern wird die metallisierte Oberfläche der Folie geprägt. Meistens wird nur die angetriebene Walze mit den Logos versehen, während die Gegenwalze(n) nur Zähne aufweisen. Bei der Verwendung von Logobereichen mit Zähnen zur Erzeugung eines unterschiedlichen spezifischen Prägedrucks kann entweder nur eine Walze, die angetriebene, oder zwei oder alle Walzen mit dem gleichen Logobereich oder der speziellen Zahnung versehen werden.

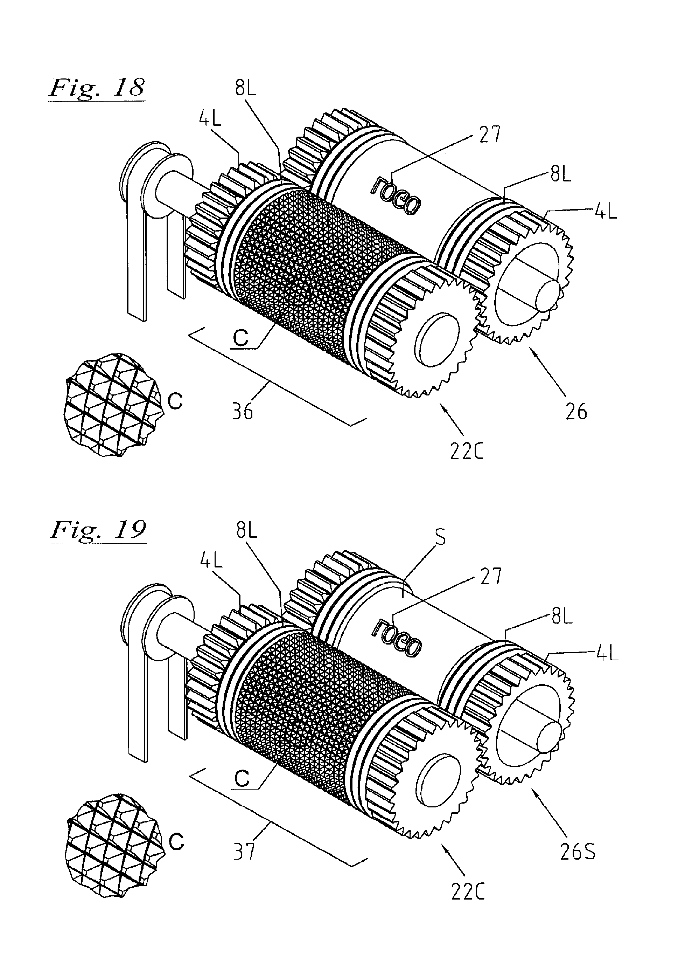

Beim Prägen von nicht metallisierten Folien ist es jedoch vorteilhaft, die Logos auf einer der nicht angetriebenen Prägewalzen anzubringen, um auf der anderen Seite der Folie positiv herausragende Logos zu erhalten. Die Prägeeinheiten 36 und 37 der Figuren 18 und 19 weisen dazu eine Walze 22C und eine Walze 26, bzw. 26S auf, wobei beide Walzen mit den gröberen Zahnkränzen 4L und Zentrierringen 8L versehen sind. Diese Prägeeinheiten sind zum positiven Prägen von Folien vorgesehen, wobei die angetriebene Walze 22C hier beispielsweise nur Zähne des Typs C aufweist, während die Prägewalze 26 oder 26S nur mit den Prägebereichen 27, hier das Wort LOGO bildend, versehen sind. Durch die Zentrierelemente 4L, 8L wird hier ausserdem vermieden, dass die Walzen an den Stellen ohne Zähne einnicken können.

In der Prägeeinheit 37 gemäss Fig. 19 befindet sich die Gesamtabsenkung S auf der Prägewalze 26S. Besonders bei Walzen mit relativ wenigen Zähnen, die das Logo bilden, ist es von Vorteil, wenn die Zentrierelemente die Walzen nicht nur zentrieren sondern auch das Einnicken verhindern.

Das Prägen in der Pin up - Pin up-Konstellation gemäss Fig. 18 oder 19 von kleinen Einbuchtungen oder Erhebungen an bestimmten Stellen eröffnet auch die Möglichkeit, relativ dünne Umhüllungsfolien zum Verpacken von Schachteln für hochwertige Güter wie elektronische Teile oder Uhren, oder Zigarettenschachteln, teuere Medikamente oder Lebensmittel wie Käse oder Schokolade mit oder ohne Zeichen im Online Verfahren zu verwenden, die an den kritischen Stellen, d. h. an den Rändern, wo die Gefahr besteht, dass die Folie reisst, Verstärkungszonen aufweisen.

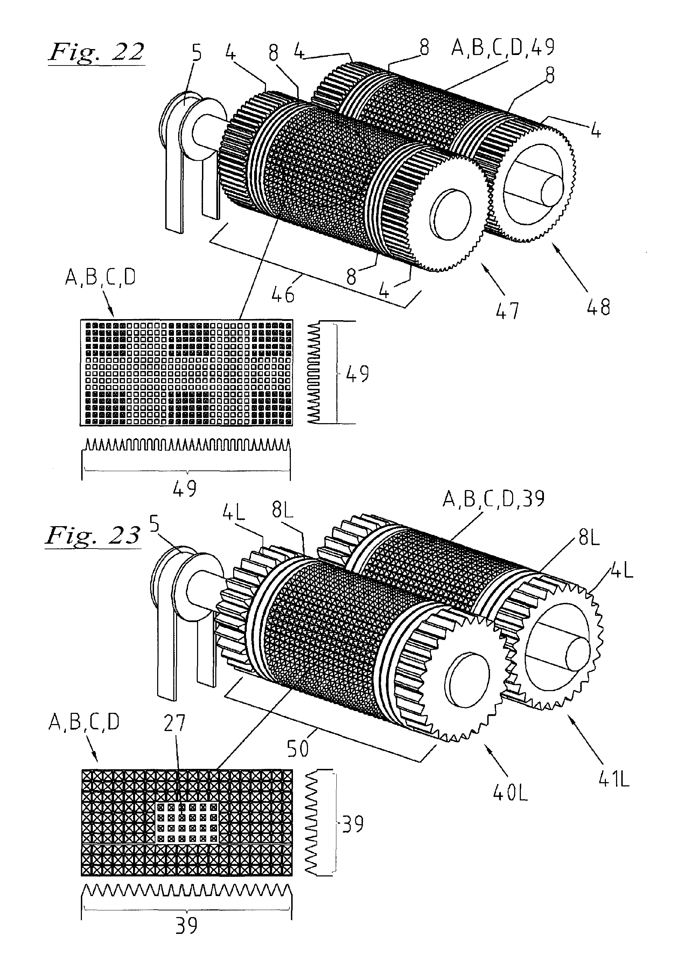

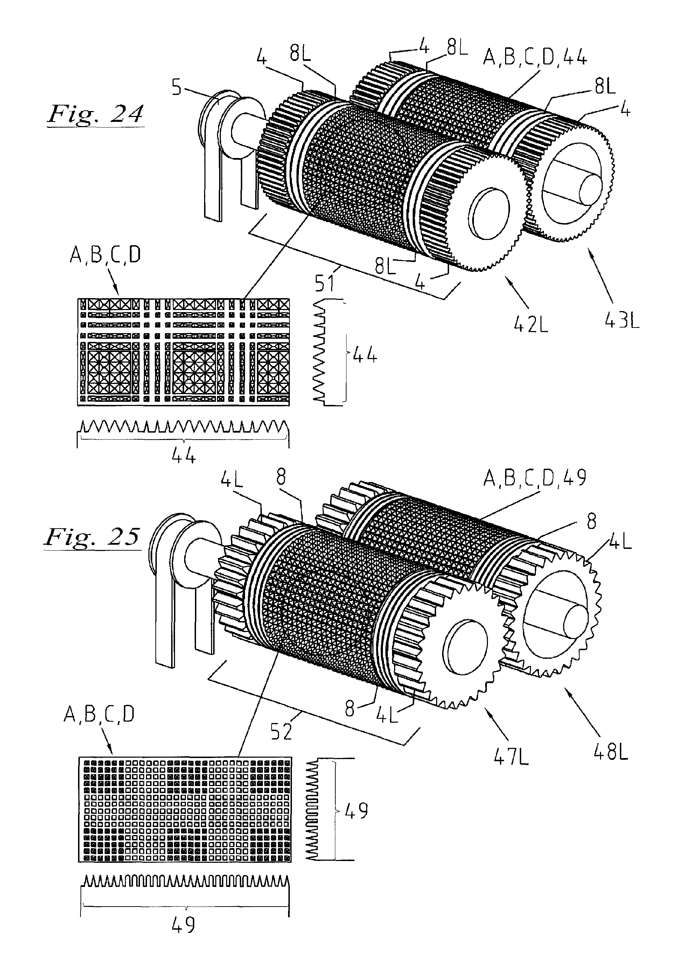

In den Figuren 20 - 25 ist schematisch der Gedanken eines variablen Prägedrucks wiedergegeben. Die Figuren 23 bis 25 entsprechen den Figuren 20 bis 22, jedoch mit unterschiedlichen Zentrierelementen. Fig. 23 zeigt beide gröbere aber deshalb nicht ungenauere Zentrierelemente 4L und 8L, Fig. 24 die gröberen Zentrierringe 8L und Fig. 25 die gröberen Zahnkränze 4L.

Gemäss Fig. 20 oder 23 wird im Kontinuum von Zähnen mit oder ohne vorbekannten Logos ein Logobereich 27 vorgesehen, der auch mehrere Teilbereiche umfassen kann. Die beiden Walzen 40 und 41 von Prägeeinheit 38 oder die Walzen 40L und 41L von Prägeeinheit 50 weisen die Zahnkränze 4, bzw. 4L und die Zentrierringe 8, bzw. 8L auf. Die Walzen können jeweils die Zähne des Typs A - D oder irgend andere pyramidenförmige oder konische Zähne aufweisen. Die Gegenwalze 41 oder 41L kann auch den Logobereich 27 aufweisen und die Prägewalze 40, 40L kann auch die Senke S aufweisen.

Der Logobereich 27 auf der Walze 40, 40L der Prägeeinheit 38, 50 weist Zähne 39 auf, die sowohl in der axialen als auch in der umfänglichen Richtung einen steileren Winkel einschliessen und somit ein breiteres Tal aufweisen als die anderen Zähne, da sie den gleichen Pitch wie die anderen Zähne besitzen. Der steilere Winkel ergibt eine schmälere Zahnspitze und bewirkt am Prägeort einen erhöhten spezifischen Prägedruck.

In den Figuren 21, 24 und 22, 25 ist eine Erweiterung der bisherigen Prägetechnik für Verpackungsfolien, insbesondere Innerliner, schematisch dargestellt, indem nicht Logobereiche mit veränderlichem spezifischen Prägedruck inmitten eines satinierten Umfeldes mit oder ohne vorbekannten Logos angeordnet sind, sondern über die gesamte Breite der Folie die speziellen Logos, die sehr kleine Bereiche umfassen können, erstellt werden, die auf der Folie einen veränderlichem spezifischen Prägedruck erzeugen.

Fig. 21, 24 zeigen zwei Walzen 42, 42L und 43, 43L der Prägeeinheiten 45, 51 wovon mindestens Walze 42, 42L eine Zahnung 44 aufweist, deren Zähne sowohl in der axialen als auch in der umfänglichen Richtung unterschiedliche Winkel einschliessen und somit Täler mit unterschiedlichen Breiten dazwischen aufweisen, die jedoch alle in axialer, bzw. umfänglicher Richtung je den gleichen Pitch aufweisen.

Die unterschiedlichen Winkel bewirken am Prägeort einen veränderlichen spezifischen Prägedruck. Spitze Winkel ergeben einen erhöhten und stumpfe Winkel einen erniedrigten spezifischen Druck. Die Gegenwalze 43, 43L kann Zähne des Typs A, B, C, D, mit oder ohne die Zahnung 44 und mit oder ohne vorbekannte Logos aufweisen. Die Walzen 42L und 43L weisen je normale Zahnkränze 4 und gröbere Zentrierringe 8L auf. Die Walze 42, 42L kann die Absenkung S aufweisen.

Fig. 22, bzw. 25 ist eine Ausführungsvariante von Fig. 21, 24 in welcher die Zahnung 49 an Walze 47, 47L und/oder 48, 48L der Prägeeinheiten 46, 52 weitere Typen von Zähnen aufweist, deren Spitzen auch eine abgerundete Form aufweisen können, wo der spezifische Prägedruck vermindert wird. Auch hier ist der Pitch für die ganze Zahnung 49 in umfänglicher, bzw. axialer Richtung je derselbe. Die Walzen 47L und 48L weisen Zentrierringe 8 sowie gröbere Zahnkränze 4L auf. Die Prägewalzen 47, 47L können auch eine Senkung S aufweisen.

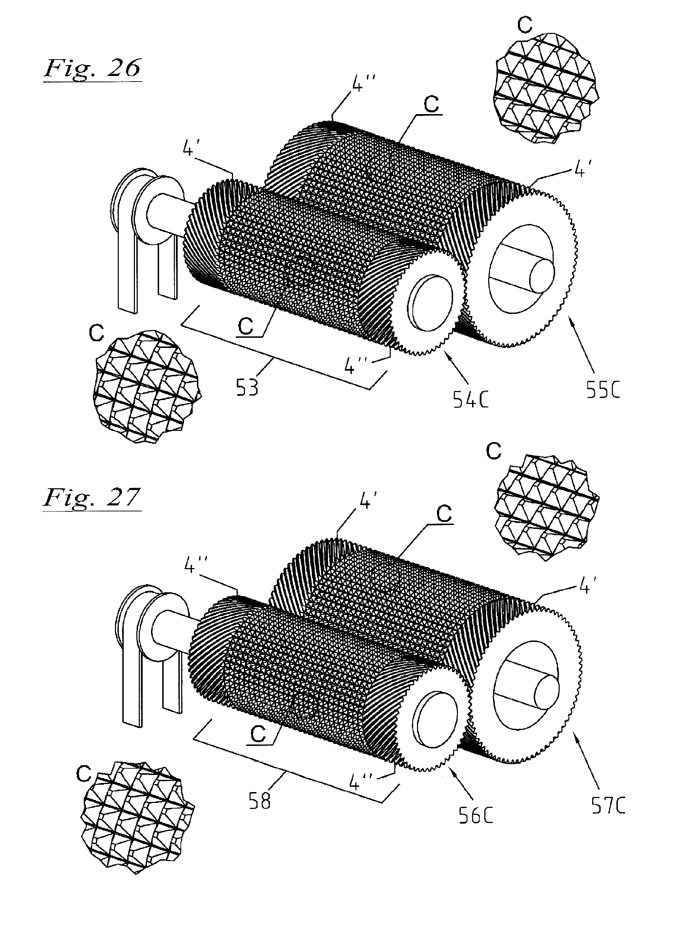

Die Figuren 26 - 29 zeigen Ausführungsvarianten der Zahnkränze zur axialen und umfänglichen Zentrierung. Fig. 26 zeigt eine Prägeeinheit 53 mit der angetriebenen Walze 54C mit Zähnen des Typs C und eine Gegenwalze 55C, ebenfalls mit Zähnen des Typs C. Im Unterschied zu den vorhergehenden Beispielen weisen die Zahnkränze 4', 4" eine Schrägverzahnung auf, die z.B. eine Evolventen-Verzahnung sein kann, wobei die Ausrichtung der Zähne, bezogen auf die umfängliche Ausrichtung, sowohl jeweils auf beiden Seiten der Walze als auch der kooperierenden Zahnkränze je verschieden sind. Beispielsweise unterschiedlicher Ausrichtung der Schrägverzahnung auf einer Walze ergibt sich eine geringere Belastung der Achse.

In Fig. 27 weisen die Zähne der Zahnkränze 8', 8" der Walzen 56C und 57C der Prägeeinheit 58 jeweils an beiden Enden die gleiche Richtung auf, die Richtungen der kooperierenden Zähne sind jedoch jeweils verschieden.

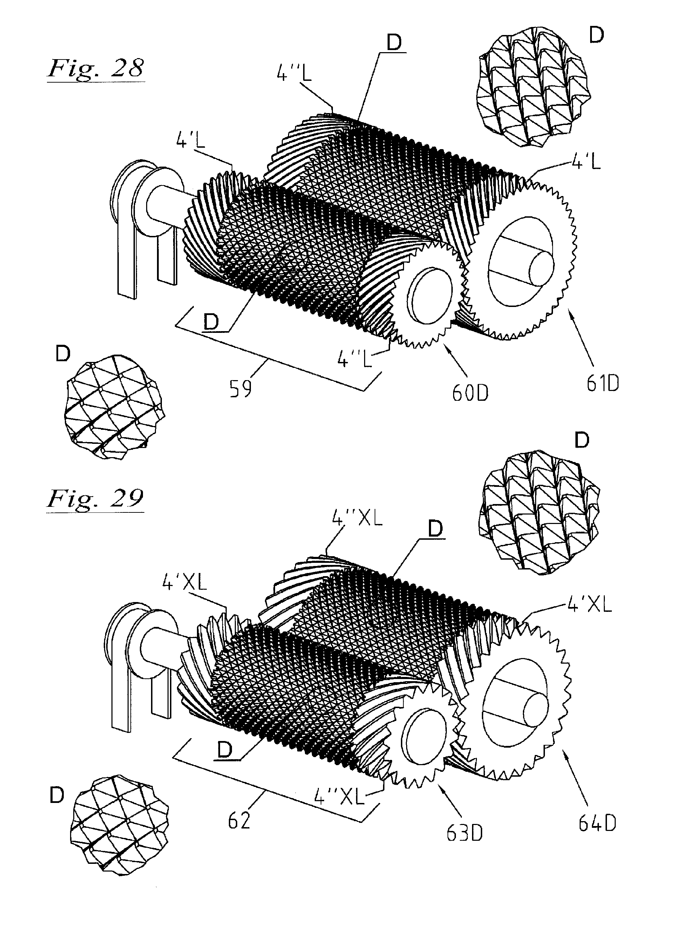

Fig. 28 zeigt eine Prägeeinheit 59 mit Walzen 60D und 61D mit Zähnen des Typs D, analog zur Prägeeinheit gemäss Fig. 11. Die Zahnkränze 4'L und 4"L entsprechen den Zahnkränzen 4' und 4" gemäss Figur 26, sind jedoch in gröberer Ausführung.

Figur 29 entspricht Fig. 28, wobei die Walzen 63D und 64D von Prägeeinheit 62 noch gröbere Zahnkränzen 4'XL und 4''XL aufweisen, die wie vorgehend ausgerichtet sind.

Solche Schrägverzahnungen ermöglichen neben weiteren an sich bekannten Vorteilen eine gute Zentrierung sowohl axial als auch umfänglich. Auch die Walzen gemäss den Figuren 26 - 29 weisen Logobereiche 27 oder die Zahnung 44, 49 auf, entweder auf einer oder beiden Walzen und können auch eine Absenkung S aufweisen.

In dieser Anmeldung ist der Pitch nicht nur für eine der Walzen sondern für alle miteinander kooperierenden Walzen in umfänglicher, bzw. axialer Richtung je derselbe.

Wie bereits ausgeführt, müssen die Seiten der Zähne nicht notwendigerweise orthogonal zu der Längsachse der Walze sein und können jeden Winkel zwischen 1° und 89° einschliessen. Die Zähne können einen Pitch zwischen den Spitzen von 0,05 mm bis 0,4 mm aufweisen, bei einer theoretischen Höhe ohne Abflachung von 0,03 mm bis 0,3 mm. Schliesslich können die Zähne auch einen runden Querschnitt und ein konische Profil aufweisen, da die Walzen Zentrier- und Antriebsmittel aufweisen, die auch als Synchronisationsmittel dienen.

Die Logobereiche 27 oder ein einzelner Logobereich 27 können (kann) auch herkömmliche Logos enthalten, die entweder durch Weglassen von Zähnen erzeugt wurden und/oder durch Zähne, die zur Erzeugung einer im Stand der Technik so genannten Schattenprägung dienen, oder in einem Umfeld erzeugt werden, das solche Logos enthält. Die Zahnung 44, 49 zur Erzeugung eines variablen spezifischen Prägedrucks kann auch obgenannte Logos enthalten.

Die Zentrierelemente 4, 4L, 4', 4", 4'L, 4''L, 4'XL, 4''XL; 8, 8L wurden in der Beschreibung stets im Zusammenhang mit den Zähnen oder Mustern zur Erzeugung eines unterschiedlichen spezifischen Prägungsdruck aufgeführt, doch sind diese Zentrierelemente auch für Anwendungen ausserhalb dieser Zähne und Muster vorteilhaft, so z.B. bei sehr kleinem Pitch oder besonders exakten Mustern.

## Patentansprüche

1. Vorrichtung zum Prägen von Folien, mit einer Prägeeinheit (1, 7, 10, 11, 12, 14, 15, 18, 21, 24, 25, 28, 29, 30, 31; 34, 35, 36, 37, 38, 45, 46, 50, 51, 52, 53, 58, 59, 62), die mindestens zwei Walzen enthält, wovon mindestens eine eine Prägewalze ist und eine Walze über einen Antrieb (5) angetrieben ist, wobei mindestens die Prägewalze vom Grundzylinder wegragende Zähne (A, B, C, D) aufweist, **dadurch gekennzeichnet, dass** mindestens die Prägewalze (2A, 2B, 2C, 16A, 19B, 22C, 2D, 32C; 26, 40, 42, 46, 50, 54C, 56C, 60D, 63D) zur Bildung von Logos auf der Folie (6) einen Logobereich (27) mit Zähnen (39) oder eine Zahnung (44, 49) aufweist, die von den regelmässig angeordneten Zähnen (A -D) verschieden sind, wobei alle Zähne in umfänglicher, bzw. axialer Richtung je die gleiche Periodizität der Zahnung (Pitch) aufweisen, um auf der Folie einen veränderlichen spezifischen Prägedruck zu erzeugen, wobei mindestens eine der Walzen sowohl axial als auch radial wirksame Zentrierelemente (4, 4L; 4', 4", 4'L, 4"L, 4'XL, 4''XL; 8, 8L) zum Zentrieren der Prägewalze bezüglich mindestens einer anderen Walze aufweist.

2. Vorrichtung nach Anspruch 1, **dadurch gekennzeichnet, dass** die Zähne (39) oder Zahnung (44, 49) mindestens der Prägewalze zur Variierung des Prägedruckes unterschiedlich prägende Spitzenoberflächen mit unterschiedlichen Seitenwinkeln und/oder kleineren Grundflächen und/oder abgerundeten Oberflächen, jedoch stets den gleichen Pitch aufweisen.

3. Vorrichtung nach Anspruch 1 oder 2, **dadurch gekennzeichnet, dass** die Zentrierelemente beidseits und ausserhalb der Prägezone Zentrierringe (8, 8L), die entweder zwischen Zentrierringen oder Zähnen der anderen Walze greifen derart, dass eine axiale Verschiebung verhindert wird und/oder Zahnkränze (4, 4L, 4', 4", 4'L, 4"L, 4'XL, 4''XL) enthalten, die einen umfänglichen Schlupf verhindern und die Kraftübertragung vergrössern sowie die Synchronisation bewirken.

4. Vorrichtung nach Anspruch 3, **dadurch gekennzeichnet, dass** die Massgenauigkeit der Zentrierringe (8, 8L), bezogen auf einen Pitch der Zähne von 0,3 mm und auf eine Länge der Walze von 250 mm, unter 20 µm beträgt.

5. Vorrichtung nach Anspruch 3 oder 4, **dadurch gekennzeichnet, dass** die Massgenauigkeit der Zähne der Zahnkränze (4, 4L, 4', 4", 4'L, 4"L, 4'XL, 4"XL), bezogen auf einen Umfang von 70 mm, unter 5 µm, bevorzugt unter 3 µm liegt.

6. Vorrichtung nach einem der Ansprüche 3 bis 5, **dadurch gekennzeichnet, dass** die Zahnkränze (4', 4", 4'L, 4"L, 4'XL, 4''XL) als Schrägverzahnungen ausgebildet sind, wobei die Richtung der an den beiden Enden einer Walze angeordneten Zähne entweder entgegengesetzt oder gleichgerichtet sind, bezüglich der kooperierenden Zähne der anderen Walze jedoch entgegengesetzt ausgerichtet sind.

7. Vorrichtung nach einem der Ansprüche 1 bis 6, **dadurch gekennzeichnet, dass** die Summe der Durchmesser der beiden beim Prägen der Folie (6) kooperierenden Walzen (16AS, 17A; 19BS', 20BS': 19BS', 9BS'; 22CS", 23CS"') über eine Länge, die etwas grösser ist als die Breite der Folie, um 0,02 bis 0,2 mm geringer ist als die Summe der Durchmesser der übrigen Teile dieser Walzen.

8. Vorrichtung nach einem der Ansprüche 1 bis 7, **dadurch gekennzeichnet, dass** die Zähne der Prägewalze zum Prägen von Logos pyramidenförmig mit rechteckigem oder quadratischen Grundriss oder konisch mit rundem Querschnitt ausgebildet sind und die Kanten der pyramidenförmigen Zähne entweder orthogonal zur Längsachse der Walze oder unter einem Winkel zwischen 1° und 89° dazu angeordnet sind.

9. Vorrichtung nach einem der Ansprüche 1 bis 8, **dadurch gekennzeichnet, dass** einzelne Zähne der Prägewalze in der Höhe oder Form verändert sind, um geprägte Zeichen zu ergeben, deren Erscheinungsbild sich je nach Beleuchtung und Betrachtungswinkel ändert, die sogenannte Schattenprägung.

10. Vorrichtung nach einem der Ansprüche 1 bis 9, **dadurch gekennzeichnet, dass** die Prägewalze (26, 26S) nur an den Stellen Zähne (A-D, 39, 44, 49) aufweist, die zum Prägen von Logos vorgesehen sind.

11. Vorrichtung nach einem der Ansprüche 1 bis 10, **dadurch gekennzeichnet, dass** im Logobereich (27) und/oder ausserhalb des Logobereiches Logos vorhanden sind, die durch Entfernen von Zähnen entstanden sind oder modifiziert wurden, um die Schattenprägung zu erzeugen und/oder um den Logobereich ein satiniertes Umfeld vorhanden ist.

12. Verpackungsfolie, mit einer Vorrichtung gemäss einem der Ansprüche 1 bis 11 hergestellt, **dadurch gekennzeichnet, dass** sie mindestens einen Logobereich aufweist, deren Prägemuster Zeichen aufweisen, die mit unterschiedlichen spezifischen Prägedrücken hergestellt worden sind und somit verschiedene Eindruckstiefen und -formen aufweisen, um ein ästhetisches Bild zu ergeben.

13. Verpackungsfolie gemäss Anspruch 12, **dadurch gekennzeichnet, dass** sich die Prägemuster über die ganze Folie erstrecken.
